# FASCICULE DE BREVET EUROPEEN

(11) **EP 3 215 377 B1**
(45) Date de publication et mention de la délivrance du brevet: **12.09.2018**
(21) Numéro de dépôt: 15798498.0
(22) Date de dépôt: 19.10.2015
(51) Int. Cl.: B60G 7/00, B60G 21/05

(54) **PORTE-FUSÉE POUR UN ESSIEU DE VÉHICULE AUTOMOBILE**
NABENTRÄGER FÜR EINE VERBUNDLENKERACHSE
HUB CARRIER FOR A TWIST BEAM AXLE

(30) Priorité: 03.11.2014 FR 1460547
(43) Date de publication de la demande: 13.09.2017
(73) Titulaire: Renault S.A.S., 92100 Boulogne-Billancourt (FR)
(72) Inventeur: ROLLET, Remi, F-91190 Gif-sur-Yvette (FR)
(86) Numéro de dépôt international: PCT/FR2015/052794
(87) Numéro de publication internationale: WO 2016/071600

(56) Documents cités:
- EP-A1- 1 622 781
- EP-A1- 2 298 581
- WO-A1-2011/110788
- DE-C1- 19 832 384
- FR-A- 1 096 872
- FR-A1- 2 853 281
- FR-A1- 2 908 689
- FR-A1- 2 972 389
- JP-A- 2002 012 015
- JP-A- 2009 227 203
- US-B1- 6 173 977

## Description

L'invention concerne un porte-fusée pour un essieu de véhicule automobile.

Dans le domaine des véhicules automobiles, une fusée est un élément solidaire d'une extrémité de l'essieu dans lequel est engagé le moyeu d'une roue du véhicule automobile. Les vibrations et les chocs que subit la roue sont donc transmis à l'essieu par l'intermédiaire de la fusée.

Afin d'obtenir un confort accru pour les passagers, on cherche à limiter les vibrations et les chocs transmis par la fusée à l'essieu.

Les amortisseurs permettent de limiter la transmission des chocs verticaux de la roue vers l'essieu.

On connait aussi l'utilisation d'une fusée filtrée montée sur l'essieu via un porte-fusée. Le porte-fusée coopère avec l'essieu par l'intermédiaire d'une liaison pivot conformée pour laisser un degré de liberté en rotation autour de l'axe transversal du véhicule automobile, de manière à ce que, lorsque le véhicule automobile est entrainé en mouvement, la roue puisse reculer ou avancer lors d'un choc longitudinal, selon que le véhicule est respectivement en train d'avancer ou de reculer. Un plot filtrant monté selon une direction transversale du véhicule automobile et traversant le porte-fusée et l'essieu, limite la rotation du porte-fusée par rapport à l'essieu autour de l'axe transversal du véhicule et permet un rappel du porte-fusée, après un choc, à une position de repos.

Cependant, pour ce type de fusée filtrée, la nature de la liaison entre le porte-fusée et l'essieu ne permet pas d'obtenir une fusée filtrée capable de braquer de manière à ce que le véhicule présente quatre roues directrices.

Le document FR2853281, déposé par la Demanderesse, décrit un essieu souple comprenant un porte-fusée apte à braquer. Cependant ce document décrit une structure ne permettant pas d'intégrer une fusée filtrée. Le document EP 1 622 781 A, décrit un essieu souple comprenant un porte-fusée filtrée apte à braquer. Cependant ce document décrit une structure utilisant des paliers pivotants au lieu de rotules et ne permettant pas de disposer l'organe élastique 54 entre le premier palier pivotant 71 d'une part et la fusée 51 d'autre part. En fonction du type de véhicule automobile, à quatre roues directrices ou à deux roues directrices, avec un essieu souple, les porte-fusées présentent des structures différentes nécessitant une adaptation particulière pour chaque type de véhicule automobile.

Aussi, il existe un besoin pour un porte-fusée pouvant être monté sur un essieu souple, comprenant une fusée filtrée et pouvant être orientée dans plusieurs directions par rapport à l'essieu du véhicule automobile, de manière à réaliser un essieu braqueur.

A cet effet, l'objet de l'invention concerne, entre autres, un porte-fusée pour un essieu d'un véhicule automobile, comprenant un élément de support fixe et un élément mobile portant une fusée destinée à supporter une roue du véhicule automobile, l'élément de support fixe comprenant une première rotule et une deuxième rotule, l'élément mobile étant articulé à l'élément de support fixe par ladite première rotule, dans lequel l'élément mobile comprend une troisième rotule reliée par un organe de liaison à la deuxième rotule de l'élément de support fixe, l'organe de liaison des rotules étant agencé de manière à maintenir une distance constante entre la deuxième et la troisième rotule.

Un tel agencement permet à la fusée de pivoter autour de plusieurs axes, en particulier autour d'un axe vertical, d'un axe transversal ou autour de ces axes combinés, par rapport à l'élément de support fixe du porte fusée et donc par rapport à l'essieu tout en limitant l'amplitude du pivotement autorisé. Ainsi, on peut avoir une fusée mobile, partiellement articulée par rapport à l'essieu, apte à braquer et à effectuer un mouvement de recul lors d'un choc longitudinal, tout en proposant une configuration adaptée pour être montée sur un essieu souple. Ainsi, on peut concevoir un porte-fusée adaptable à différentes configurations, par exemple adaptable pour un véhicule à quatre roues directrices, ou à deux roues directrices, par exemple sur essieu souple, la fusée étant en outre conformée pour pouvoir filtrer les chocs longitudinaux. Selon l'invention, l'élément mobile du porte-fusée et l'élément de support fixe sont reliés par un organe élastique amortissant un mouvement relatif entre l'élément mobile et l'élément de support fixe, par exemple un mouvement de recul ou d'avancement, par exemple produit par la rotation de l'élément mobile relativement à l'élément de support fixe autour d'un axe sensiblement transversal du véhicule.

Avantageusement et de manière non limitative, l'organe élastique peut amortir ou absorber un mouvement ou une force sensiblement longitudinale et être relativement peu contraignant dans les autres directions, transversale et verticale.

L'organe élastique peut être un élément filtrant, par exemple un plot filtrant, un dispositif hydro-élastique, un ressort, ou tout autre moyen d'absorption ou d'amortissement d'un choc ou d'une force produisant un mouvement relatif de l'élément mobile par rapport à l'élément de support fixe.

L'organe élastique peut être un bloc de matériau polymère absorbant les vibrations, par exemple en caoutchouc naturel ou synthétique. Le dispositif hydro-élastique, par exemple une articulation hydro-élastique, peut comprendre des ressorts en élastomère et un système d'amortissement hydraulique intégré.

Ainsi, un choc subi par la roue ou par la fusée, dans une direction sensiblement longitudinale du véhicule, pourra être amorti afin de limiter sa transmission à l'essieu, ce qui augmente la sensation de confort des passagers du véhicule automobile.

Avantageusement et de manière non limitative, l'organe élastique permet le rappel de l'élément mobile à une position de repos après un choc. Autrement dit, lorsqu'un choc longitudinal se produit, la fusée est apte à reculer par la rotation de l'élément mobile du porte-fusée autour d'un axe transversal, l'organe élastique étant agencé pour limiter la rotation, absorber la force du choc et ramener la fusée à sa position initiale d'avant le choc. Ainsi la capacité de rappel de l'élément mobile à sa position de repos permet d'allier le confort avec la qualité de comportement du véhicule, en particulier lorsque la roue subit un choc longitudinal, par exemple lorsque le véhicule automobile franchit un raccord de chaussée.

Avantageusement et de manière non limitative, la fusée et l'organe élastique peuvent être disposés à proximité l'un de l'autre, par exemple à une distance de 5cm à 10cm. En particulier, la fusée et l'organe élastique peuvent être sensiblement l'un à la verticale de l'autre, par exemple la fusée peut être au dessus, à la verticale, de l'organe élastique dans la position initiale.

En particulier, l'organe élastique peut permettre un recul, et/ou un avancement, de la fusée d'une distance d'environ 3mm à 10mm suivant la direction longitudinale du véhicule.

Selon l'invention, l'organe élastique est disposé entre la première rotule d'une part la fusée d'autre part. Ainsi le porte-fusée peut être relativement compact et peu encombrant. La capacité de recul de la fusée pouvant en outre être simplement dimensionnée en fonction de la capacité de déformation de l'organe élastique, par exemple lors d'un choc.

Avantageusement et de manière non limitative, l'organe de liaison des deuxième et troisième rotules peut être une biellette, par exemple une tige rigide, non déformable, par exemple en métal ou en tout autre matériau adapté.

L'invention concerne aussi un essieu d'un véhicule automobile, notamment essieu arrière, comprenant deux bras reliés par une traverse, dans lequel chaque bras est solidaire d'un élément de support fixe d'un porte-fusée tel que décrit précédemment.

En particulier, l'essieu peut être un essieu souple.

Ainsi l'essieu est moins soumis aux chocs longitudinaux tout en étant capable d'offrir un bon comportement, de par la variation possible de la position et de l'angle de la fusée par rapport à l'essieu, en particulier lorsque le véhicule subit un choc longitudinal sur la roue.

Avantageusement et de manière non limitative, l'essieu peut comprendre, pour chaque porte-fusée, un organe de liaison, par exemple une bielle, qui relie l'essieu à une portion saillante de l'élément mobile du porte-fusée, par exemple solidarisé à la portion saillante par une liaison rotule ou tout autre type de liaison adaptée ne gênant pas le mouvement de l'élément mobile par rapport à l'élément de support fixe, de manière à contrôler la distance entre la portion saillante de l'élément mobile, notamment l'extrémité libre de ladite portion saillante, et le bras de l'essieu. Un tel contrôle de cette distance peut permettre un meilleur maintien de l'élément mobile du porte fusée et donc de la roue, tout en rendant possible un braquage de la roue. Il est ainsi possible avec un même porte-fusée, de réaliser un essieu avec des roues directrices ou non.

Avantageusement et de manière non limitative, chaque organe de liaison peut relier ladite portion saillante de l'élément mobile d'un porte-fusée au bras de l'essieu supportant le porte-fusée, par exemple par une liaison rotule ou tout autre type de liaison adaptée ne gênant pas le mouvement de l'élément mobile par rapport à l'élément de support fixe, de telle sorte que la distance entre la portion saillante de l'élément mobile, notamment l'extrémité libre de ladite portion saillante, et le bras de l'essieu est constante, quelque soit la position relative de l'élément mobile et de l'élément de support fixe. L'essieu ne permet alors pas d'orienter les roues en braquage.

Avantageusement et de manière non limitative, l'essieu peut comprendre un bras formant palonnier s'étendant transversalement à la traverse et relié à une partie médiane de celle-ci par un axe d'articulation sensiblement vertical, chaque organe de liaison reliant ladite portion saillante de l'élément mobile d'un porte-fusée au bras formant palonnier, de telle sorte que la distance entre la portion saillante de l'élément mobile, notamment l'extrémité libre de ladite portion saillante, et le bras de l'essieu peut varier selon l'orientation du bras formant palonnier relativement à la traverse.

Ainsi, on peut obtenir un essieu souple à fusée filtrée et capable de braquer. Ce porte-fusée pouvant être adapté à tout type d'essieu, souple ou non, commandé en braquage ou non.

L'invention concerne aussi un véhicule automobile comprenant un essieu, par exemple un essieu arrière, un essieu avant ou les essieux arrière et avant, tel que décrit précédemment, par exemple un véhicule automobile à essieux souples à fusées filtrées et à quatre roues directrices.

L'invention est maintenant décrite en référence aux dessins annexés, non limitatifs, dans lesquels :
- la figure 1 est une vue en perspective d'un porte-fusée selon un premier mode de réalisation de l'invention ;
- la figure 2 est une vue de détail d'un porte-fusée selon un deuxième mode de réalisation de l'invention ;
- la figure 3 est une vue de côté d'un porte-fusée commun aux modes de réalisation de la figure 1 et 2 ; et
- la figure 4 est une vue schématique d'un essieu de véhicule automobile comprenant deux portes-fusée selon le premier mode de réalisation de l'invention.

Dans la présente description, les termes avant, arrière, supérieur, inférieur, font référence aux directions avant et arrière du véhicule lorsque l'essieu est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

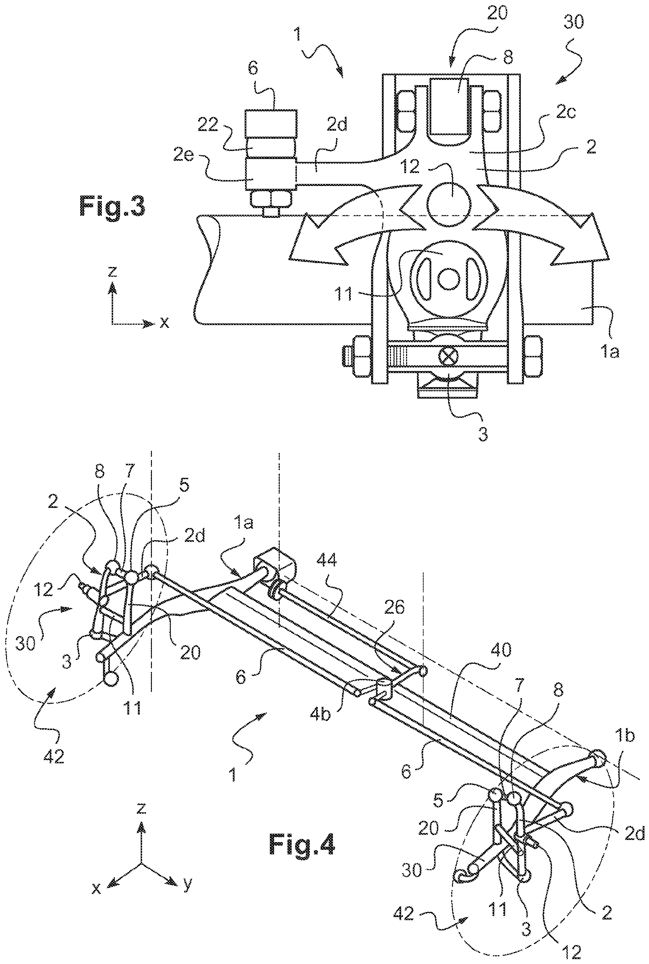

En référence à la figure 4, un véhicule automobile comprend un essieu 1, ici un essieu arrière 1.

L'essieu 1 comprend une traverse 40, ici une traverse 40 élastiquement déformable en torsion, reliant transversalement deux bras la, lb.

Chaque bras la, 1b, solidarisé à la traverse 40, s'étend dans une direction sensiblement longitudinale X du véhicule automobile.

Chaque bras la, lb supporte un porte-fusée 30, ici le porte-fusée 30 est installé sur le bras correspondant la, lb sensiblement en avant de la traverse 40, selon l'axe longitudinal X.

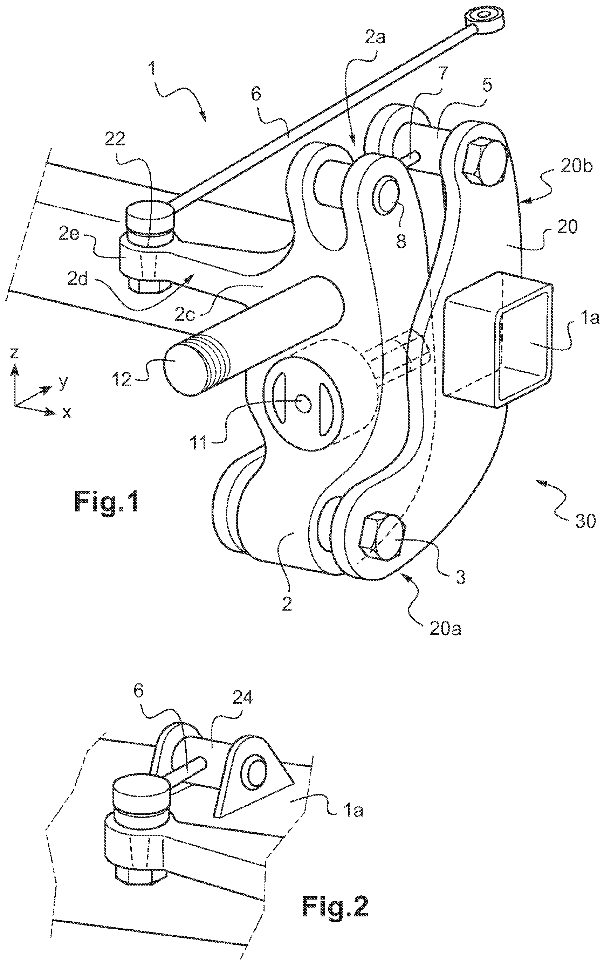

En référence aux figures 1 et 3, chaque porte-fusée 30 comprend un élément de support fixe 20 et un élément mobile 2 lequel porte une fusée 12 destinée à supporter une roue 42 du véhicule automobile. Sur la figure 4, les roues 42 sont symbolisées par des ellipses.

L'élément de support fixe 20 comprend une première rotule 3 et une deuxième rotule 5. Ici l'élément de support fixe 20 présente une forme sensiblement en L qui définit une base 20a sensiblement horizontal et une partie sensiblement verticale 20b. L'invention n'est toutefois pas limitée à une forme particulière de l'élément support fixe 20, dont la forme ne limite en rien les mouvements relatifs entre l'élément support fixe 20 et l'élément mobile 2.

La première rotule 3 est montée sur l'extrémité libre de la base 20a de l'élément de support fixe 20.

La première rotule 3 relie directement l'élément mobile 2 à l'élément de support fixe 20. Autrement dit, la première rotule 3 est commune à l'élément support fixe 20 et à l'élément mobile 2.

Cette première rotule 3 forme ainsi une liaison rotule entre l'élément support fixe 20 et l'élément mobile 2 qui bloque trois degrés de liberté, à savoir les translations dans les directions longitudinale X, transversale Y et verticale Z, mais laisse libre en rotation les deux éléments dans tous les axes de rotations, à savoir autour de l'axe longitudinal X, autour de l'axe transversal Y et autour de l'axe vertical Z.

La deuxième rotule 5 est montée sur l'extrémité libre de la partie sensiblement verticale 20b de l'élément de support fixe 20.

L'élément mobile 2 comprend une troisième rotule 8. Ici, l'élément mobile 2 présente une partie supérieure 2a, sensiblement en forme de fourche, recevant la troisième rotule 8, l'invention n'est toutefois pas limitée à cette forme particulière de la partie supérieure 2a.

L'élément mobile 2 et l'élément de support fixe 20 sont alignés, en une position de repos du porte-fusée 30.

La position de repos du porte-fusée 30 correspond à la position relative de l'élément mobile 2 avec l'élément de support fixe 20 lorsque la fusée 12 n'est soumise à aucune force longitudinale, en particulier lorsque le véhicule automobile est à l'arrêt sur une surface plane et horizontale. Autrement dit, la position de repos est la position naturelle, ou de conception, du porte-fusée 30.

La troisième rotule 8 est reliée par un organe de liaison 7 à la deuxième rotule 5 de l'élément de support fixe 20. L'organe de liaison 7, ici une biellette 7, maintient une distance constante entre la deuxième 5 et la troisième rotule 8. Autrement dit, la biellette 7 bloque le mouvement de l'élément mobile 2 en rotation autour de l'axe longitudinal X, appelé mouvement de carrossage.

Ainsi, les liaisons formées par la première rotule 3, la deuxième rotule 5 et la troisième rotule 8, entre l'élément de support fixe 20 et l'élément mobile 2 permettent à l'élément mobile 2 de se déplacer en rotation autour d'un axe sensiblement transversal Y et en rotation autour d'un axe sensiblement vertical Z, mais avec une amplitude limitée par la présence de l'organe de liaison 7. Autrement dit, les degrés de liberté en translation suivant l'axe longitudinal X, l'axe transversal Y et l'axe vertical Z, et en rotation autour de l'axe longitudinal X sont bloqués.

Ainsi, la fusée 12 montée sur l'élément mobile 2 est apte à effectuer un mouvement de recul, sous l'effet de la rotation de l'élément mobile 2 par rapport à l'élément de support fixe 20, autour de l'axe transversal Y, cette rotation s'accompagnant d'une légère rotation autour de l'axe vertical Z. A titre d'exemple, la longueur de la biellette 7 peut être de 5cm à 10cm. Elle peut être déterminée en fonction du type de véhicule automobile sur lequel est monté l'essieu 1.

Le porte-fusée 30 comprend aussi un organe élastique 11, ici un plot filtrant 11, limitant la rotation de l'élément mobile 2 du porte-fusée 30 par rapport à l'élément de support fixe 20 autour de l'axe transversal Y. Ce plot filtrant 11 est disposé entre l'élément mobile 2 et l'élément de support fixe 20. Le plot filtrant 11 peut être une articulation élastique, par exemple une articulation hydro-élastique, d'axe sensiblement parallèle à l'axe de la fusée 12. La conception du plot filtrant 11 n'est pas limitée à cette articulation élastique, mais peut être obtenue par tous moyens aptes à absorber un choc longitudinal entre l'élément mobile 2 et l'élément de support fixe 20.

Dans la position de repos du porte-fusée 30, la biellette 7 est sensiblement parallèle à l'axe du plot filtrant 11, ici suivant une direction sensiblement transversale Y.

Le plot filtrant 11 est agencé pour absorber les mouvements longitudinaux de l'élément mobile 2, par rapport à l'élément support fixe 20, de manière à limiter la transmission à l'essieu des forces longitudinales subies par la roue ou la fusée, de manière à augmenter le confort des passagers du véhicule automobile.

Le plot filtrant 11 permet aussi le rappel de l'élément mobile 2 de manière à ramener le porte-fusée en position de repos. Autrement dit, si l'élément mobile 2 pivote lors d'un choc, par rapport à l'élément support fixe 20, le plot filtrant 11 produira le mouvement inverse sur l'élément mobile 2 après avoir absorbé le choc. De cette manière, les qualités d'adhérence et de comportement de la roue 42 sur le sol sont assurées en permettant un retour rapide de la roue 42 à sa position de repos.

Ainsi, la force d'un choc longitudinal auquel serait soumis, par exemple, une roue montée sur la fusée 12 de l'élément mobile 2, serait absorbée par le plot filtrant 11 lors de la rotation produite par la force du choc de l'élément mobile 2 par rapport à l'élément de support fixe 20. Ceci permet de limiter les chocs transmis à l'essieu 1, ce qui augmente le confort des passagers du véhicule automobile.

Ici, le plot filtrant 11 et la fusée 12 sont disposés à proximité l'un de l'autre au niveau de la face 2c de l'élément mobile 2. Ici la fusée 12 est située au dessus, sensiblement à la verticale, du plot filtrant 11. Ici le plot filtrant 11 est distant de la fusée 12, sensiblement verticalement, d'environ 5cm à 10cm.

Ici, la fusée 12 est située au-dessus du plot filtrant 11.

La face 2c est la face orientée en direction de la roue 42 lorsqu'elle est montée sur la fusée 12. Ainsi, il est relativement simple de contrôler la distance de recul de la fusée 12 lors d'un choc, dans la mesure où elle correspondra sensiblement à la distance longitudinale sur laquelle le plot filtrant 11 limite la rotation de l'élément mobile 2 par rapport à la partie support fixe 20. Ici le plot filtrant 11 est espacé sensiblement verticalement d'environ 5cm à 10cm de la fusée 12, et lorsque le plot filtrant 11 est apte à se déformer sur une distance longitudinale de 3mm à 6mm pour absorber un choc longitudinal, la fusée pourra reculer d'environ 5mm à 10mm.

Ici, le plot filtrant 11 et la fusée 12 sont disposés entre la première rotule 3 et la troisième rotule 8.

Le plot filtrant 11 est sensiblement à équidistance de la première rotule 3 et de la fusée 12. Cet agencement permet en particulier d'obtenir un élément mobile 2 relativement compact.

L'élément mobile 2, présente une portion saillante 2d, s'étendant sensiblement parallèlement au bras la de l'essieu 1, vers l'avant du véhicule automobile.

La portion saillante 2d comprend à une extrémité libre 2e une rotule 22. Cette rotule 22 est solidarisée à une extrémité d'une bielle 6.

Ici, la portion saillante 2d s'étend vers l'avant de l'élément mobile 2.

Dans le mode de réalisation représenté sur les figures 1 et 4, la bielle 6 est solidarisée à son autre extrémité à un bras formant palonnier 26 monté transversalement sur la traverse 40 de l'essieu 1.

Le bras formant palonnier 26, ou palonnier 26, est relié à la partie médiane de la traverse 40 par un axe d'articulation 46 sensiblement vertical. L'extrémité du palonnier 26 dirigée vers l'arrière du véhicule est reliée par la bielle 6 à l'élément mobile 2 du porte-fusée 30, tel que décrit plus haut. La bielle 6 s'étend ainsi sensiblement parallèlement à la traverse 40. Cette bielle 6 est commandée via la rotation du palonnier 26 autour de son axe 46. Cette rotation du palonnier 26 peut être commandée par un organe de commande 44 reliant l'extrémité du palonnier 26 dirigée vers l'avant du véhicule à la caisse du véhicule ou à l'un des bras de l'essieu. Cet organe de commande 44 peut être un vérin ou une biellette. A titre d'exemple, le palonnier 26 de l'essieu 1 et son organe de commande 44 peuvent être tel que décrit dans le document FR2853281.

La rotation du palonnier 26 permet d'écarter ou de rapprocher l'extrémité libre 2e du bras la de l'essieu 1. Ainsi, on peut commander le braquage de l'élément mobile 2 du porte-fusée 30 par rapport à l'essieu 1.

Selon un mode de réalisation alternatif, en référence à la figure 2, la bielle 6 est solidarisée à son autre extrémité à une rotule 24 solidaire du bras la de l'essieu 1.

En position de repos, la rotule 22, liant la bielle 6 à l'élément mobile 2, et la rotule 24, liant la bielle 6 au bras la, sont sensiblement alignées dans une direction transversale du véhicule automobile.

Dans ce mode de réalisation, la bielle 6 est d'une longueur définie de manière à ce que la fusée 12 soit sensiblement orientée dans une direction transversale Y du véhicule automobile. La longueur de la bielle 6 est ici définie en fonction de la longueur de la biellette 7, de manière à assurer une orientation relativement constante de la fusée 12, sensiblement transversale Y, afin d'assurer un parallélisme correct des roues du véhicule automobile, en particulier lorsqu'il s'agit de roues 42 non directionnelles d'un essieu arrière 1.

## Revendications

1. Porte-fusée (30) pour un essieu (1) d'un véhicule automobile, comprenant un élément de support fixe (20) et un élément mobile (2) portant une fusée (12) destinée à supporter une roue (42) du véhicule automobile, l'élément de support fixe (20) comprenant une première rotule (3) et une deuxième rotule (5), l'élément mobile (2) étant articulé à l'élément de support fixe (20) par ladite première rotule (3),
**caractérisé en ce que** l'élément mobile (2) comprend une troisième rotule (8) reliée par un organe de liaison (7) à la deuxième rotule (5) de l'élément de support fixe (20), l'organe de liaison des rotules étant agencé de manière à maintenir une distance constante entre la deuxième (5) et la troisième (8) rotule ; l'élément mobile (2) du porte-fusée (30) et l'élément de support fixe (20) étant reliés par un organe élastique (11) amortissant un mouvement relatif entre l'élément mobile (2) et l'élément de support fixe (20) ; et l'organe élastique (11) étant disposé entre la première rotule (3) d'une part et la fusée (12) d'autre part.

2. Porte-fusée (30), selon la revendication 1, **caractérisé en ce que** la fusée (12) et l'organe élastique (11) sont disposés à proximité l'un de l'autre.

3. Porte-fusée (30), selon la revendication 1 ou 2, **caractérisé en ce que** l'organe de liaison des deuxième et troisième rotules est une biellette.

4. Essieu (1) d'un véhicule automobile, notamment essieu arrière, comprenant deux bras (1a, 1b) reliés par une traverse (40), **caractérisé en ce que** chaque bras (1a, 1b) est solidaire d'un élément de support fixe (20) d'un porte-fusée (30) selon l'une quelconque des revendications 1 à 3.

5. Essieu (1), selon la revendication 4, **caractérisé en ce qu'**il comprend, pour chaque porte-fusée (30), un organe de liaison (6) qui relie l'essieu (1) à une portion saillante (2d) de l'élément mobile (2) du porte-fusée (30), de manière à contrôler la distance entre la portion saillante (2d) de l'élément mobile (2), notamment l'extrémité libre de ladite portion saillante, et le bras (1a) de l'essieu (1).

6. Essieu (1), selon la revendication 5, **caractérisé en ce que** chaque organe de liaison (6) relie ladite portion saillante de l'élément mobile d'un porte-fusée (30) au bras (1a, 1b) de l'essieu (1) supportant le porte-fusée (30), de telle sorte que la distance entre la portion saillante (2d) de l'élément mobile (2), notamment l'extrémité libre de ladite portion saillante, et le bras (1a, 1b) de l'essieu (1) est constante, quelque soit la position relative de l'élément mobile (2) et de l'élément de support fixe (20).

7. Essieu (1), selon la revendication 5, **caractérisé en ce qu'**il comprend un bras formant palonnier (26) s'étendant transversalement à la traverse (40) et relié à une partie médiane de celle-ci par un axe d'articulation (46) sensiblement vertical, chaque organe de liaison (6) reliant ladite portion saillante de l'élément mobile d'un porte-fusée (30) au bras formant palonnier (6), de telle sorte que la distance entre la portion saillante (2d) de l'élément mobile (2), notamment l'extrémité libre de ladite portion saillante, et le bras (1a, 1b) de l'essieu (1) peut varier selon l'orientation du bras formant palonnier (26) relativement à la traverse (40).

8. Véhicule automobile **caractérisé en ce qu'**il comprend un essieu (1) selon l'une quelconque des revendications 4 à 7.

## Patentansprüche

1. Nabenträger (30) für eine Kraftfahrzeugachse (1), umfassend ein festes Tragelement (20) und ein bewegliches Element (2), das eine Nabe (12) trägt, die dazu bestimmt ist, ein Rad (42) des Kraftfahrzeugs zu tragen, das feste Tragelement (20) umfassend ein erstes Kugelgelenk (3) und ein zweites Kugelgelenk (5), wobei das bewegliche Element (2) durch das erste Kugelgelenk (3) an das feste Tragelement (20) angelenkt ist,
**dadurch gekennzeichnet, dass** das bewegliche Element (2) ein drittes Kugelgelenk (8) umfasst, das durch ein Verbindungsglied (7) mit dem zweiten Kugelgelenk (5) des festen Tragelements (20) verbunden ist, wobei das Verbindungsglied der Kugelgelenke derart angeordnet ist, dass ein konstanter Abstand zwischen dem zweiten (5) und dem dritten Kugelgelenk (8) beibehalten wird; wobei das bewegliche Element (2) des Nabenträgers (30) und das feste Tragelement (20) durch ein elastisches Glied (11) verbunden sind, das eine relative Bewegung zwischen dem beweglichen Element (2) und dem festen Tragelement (20) dämpft; und das elastische Glied (11) zwischen dem ersten Kugelgelenk (3) einerseits und der Nabe (12) andererseits angeordnet ist.

2. Nabenträger (30) nach Anspruch 1, **dadurch gekennzeichnet, dass** die Nabe (12) und das elastische Glied (11) nahe zueinander angeordnet sind.

3. Nabenträger (30) nach Anspruch 1 oder 2, **dadurch gekennzeichnet, dass** das Verbindungsglied des zweiten und dritten Kugelgelenks eine Stange ist.

4. Achse (1) eine Kraftfahrzeugs, insbesondere eine Hinterachse, umfassend zwei Arme (1a, 1b) die durch eine Querstange (40) verbunden sind, **dadurch gekennzeichnet, dass** jeder Arm (1a, 1b) mit einem festen Tragelement (20) eines Nabenträgers (30) nach einem der Ansprüche 1 bis 3 fest verbunden ist.

5. Achse (1) nach Anspruch 4, **dadurch gekennzeichnet, dass** sie für jeden Nabenträger (30) ein Verbindungsglied (6) umfasst, das die Achse (1) mit einem hervorstehenden Abschnitt (2d) des beweglichen Elements (2) des Nabenträgers (30) verbindet, um den Abstand zwischen dem hervorstehenden Abschnitt (2d) des beweglichen Elements (2), insbesondere dem freien Ende des hervorstehenden Abschnitts, und dem Arm (1a) der Achse (1) zu steuern.

6. Achse (1) nach Anspruch 5, **dadurch gekennzeichnet, dass** jedes Verbindungsglied (6) den hervorstehenden Abschnitt des beweglichen Elements eines Nabenträgers (30) mit dem Arm (1a, 1b) der Achse (1) verbindet, die den Nabenträger (30) trägt, so dass der Abstand zwischen dem hervorstehenden Abschnitt (2d) des beweglichen Elements (2), insbesondere dem freien Ende des hervorstehenden Abschnitts, und dem Arm (1a, 1b) der Achse (1) konstant ist, unabhängig von der relativen Position des beweglichen Elements (2) und des festen Tragelements (20).

7. Achse (1) nach Anspruch 5, **dadurch gekennzeichnet, dass** sie einen Arm umfasst, der einen Hebel (26) bildet, der sich quer zu der Querstange (40) erstreckt, und mit einem mittleren Abschnitt derselben durch eine im Wesentlichen vertikale Gelenkachse (46) verbunden ist, wobei jedes Verbindungsglied (6) den hervorstehenden Abschnitt des beweglichen Elements eines Nabenträgers (30) mit dem Arm verbindet, der einen Hebel (6) bildet, so dass der Abstand zwischen dem hervorstehenden Abschnitt (2d) des beweglichen Elements (2), insbesondere dem freien Ende des hervorstehenden Abschnitts, und dem Arm (1a, 1b) der Achse (1) je nach der Orientierung des Arms, der einen Hebel (26) bildet, bezogen auf die Querstange (40) variieren kann.

8. Kraftfahrzeug, **dadurch gekennzeichnet, dass** es eine Achse (1) nach einem der Ansprüche 4 bis 7 aufweist.

## Claims

1. Steering knuckle (30) for a motor vehicle axle (1), comprising a fixed support element (20) and a moving element (2) carrying a spindle (12), intended to support a wheel (42) of the motor vehicle, the fixed support element (20) comprising a first swivel joint (3) and a second swivel joint (5), the moving element (2) being articulated with the fixed support element (20) by said first swivel joint (3),
**characterized in that** the moving element (2) comprises a third swivel joint (8) linked by a connection member (7) to the second swivel joint (5) of the fixed support element (20), the connection member of the swivel joints being arranged so as to maintain a constant distance between the second (5) and the third (8) swivel joint; the moving element (2) of the steering knuckle (30) and the fixed support element (20) being linked by an elastic member (11) damping a relative movement between the moving element (2) and the fixed support element (20); and the elastic member (11) being disposed between the first swivel joint (3) on the one hand and the spindle (12) on the other hand.

2. Steering knuckle (30) according to Claim 1, **characterized in that** the spindle (12) and the elastic member (11) are disposed in proximity to one another.

3. Steering knuckle (30) according to Claim 1 or 2, **characterized in that** the connection member of the second and third swivel joints is a tie-rod.

4. Axle (1) of a motor vehicle, in particular a rear axle, comprising two arms (1a, 1b) linked by a cross member (40), **characterized in that** each arm (1a, 1b) is integral with a fixed support element (20) of a steering knuckle (30) according to any one of Claims 1 to 3.

5. Axle (1), according to Claim 4, **characterized in that** it comprises, for each steering knuckle (30), a connection member (6) which links the axle (1) to a projecting portion (2d) of the moving element (2) of the steering knuckle (30), in such a way as to control the distance between the projecting portion (2d) of the moving element (2), in particular the free extremity of said projecting portion, and the arm (1a) of the axle (1).

6. Axle (1), according to Claim 5, **characterized in that** each connection member (6) links said projecting portion of the moving element of a steering knuckle (30) to the arm (1a, 1b) of the axle (1) supporting the steering knuckle (30), such that the distance between the projecting portion (2d) of the moving element (2), in particular the free extremity of said projecting portion, and the arm (1a, 1b) of the axle (1) is constant, irrespective of the relative position of the moving element (2) and of the fixed support element (20).

7. Axle (1), according to Claim 5, **characterized in that** it comprises an arm forming a cross bar (26) extending transversely to the cross member (40) and linked to a median part thereof by a substantially vertical articulation axis (46), each connection member (6) linking said projecting portion of the moving element of a steering knuckle (30) to the arm forming a cross bar (6), such that the distance between the projecting portion (2d) of the moving element (2), in particular the free extremity of said projecting portion, and the arm (1a, 1b) of the axle (1) may vary depending on the orientation of the arm forming a cross bar (26) relative to the cross member (40).

8. Motor vehicle, **characterized in that** it comprises an axle (1) according to any one of Claims 4 to 7.
